# EUROPÄISCHE PATENTSCHRIFT

(11) **EP 3 515 246 B1**
(45) Veröffentlichungstag und Bekanntmachung des Hinweises auf die Patenterteilung: **07.05.2025**
(21) Anmeldenummer: 17778225.7
(22) Anmeldetag: 20.09.2017
(51) Int. Cl.: A46B 3/08, A46B 9/04

(54) **BÜRSTENKOPF, INSBESONDERE FÜR EINE ELEKTRISCH ANGETRIEBENE ZAHNBÜRSTE, UND VERFAHREN ZU DEREN HERSTELLUNG**
BRUSH HEAD, IN PARTICULAR FOR AN ELECTRICALLY DRIVEN TOOTHBRUSH, AND METHOD FOR THE PRODUCTION THEREOF
TÊTE DE BROSSE, EN PARTICULIER POUR UNE BROSSE À DENTS À ENTRAÎNEMENT ÉLECTRIQUE ET SON PROCÉDÉ DE FABRICATION

(30) Priorität: 22.09.2016 DE 102016011477
(43) Veröffentlichungstag der Anmeldung: 31.07.2019
(73) Patentinhaber: M+C Schiffer GmbH, 53577 Neustadt/Wied (DE)
(72) Erfinder: BUCHHOLZ, Erwin, 53567 Asbach (DE); MEYER, Berthold, 53577 Neustadt/Wied (DE); SCHMIDT, Eric, 56588 Waldbreitbach (DE)
(74) Vertreter: Grünecker Patent- und Rechtsanwälte PartG mbB
(86) Internationale Anmeldenummer: PCT/EP2017/073760
(87) Internationale Veröffentlichungsnummer: WO 2018/054965

(56) Entgegenhaltungen:
- EP-A1- 2 599 403
- EP-A1- 3 165 126
- DE-A1- 102005 024 082

## Beschreibung

Die vorliegende Erfindung betrifft einen Bürstenkopf für eine elektrisch angetriebene Zahnbürste. Ein solcher Bürstenkopf wird üblicherweise als Bestandteil eines Aufsetzteiles vertrieben, welches mit einem Handstück der elektrisch angetriebenen Zahnbürste, welches üblicherweise den Antrieb in sich aufnimmt, verbindbar ist. Das Aufsetzteil ist dabei ein Verbrauchsteil und aus Kunststoff hergestellt. Das Aufsetzteil umfasst üblicherweise ein Hülsenstück, welches von einer Antriebswelle durchsetzt ist, die mit einer Antriebswelle des Handstücks verbindbar ist. Am freien Ende des Hülsenstücks befindet sich regelmäßig der Bürstenkopf nach der vorliegenden Erfindung.

Grundsätzlich besteht bei Reinigungselementen für den Mundraum das Bedürfnis, diese sehr kompakt und raumsparend auszubilden, da der Platz in dem Mundraum begrenzt ist, wobei die Reinigung von bukkalen Zahnflächen ohnehin durch die unmittelbar angrenzende Wange schwierig ist.

Es bestehen verschiedene Möglichkeiten, Borstenbündel, die üblicherweise zur Zahnreinigung eingesetzt werden, an einem Borstenträger zu befestigen. Das Inmold-Verfahren, bei welchem an dem Borstenbündel eine Verdickung ausgebildet wird, die durch flüssigen Kunststoff, der den Borstenträger oder zumindest einen Teil davon ausbildet, umsiegelt wird, erlaubt dabei die Herstellung von in der Höhe relativ gering aufbauenden Bürsten. Als Höhe im Sinne der vorliegenden Erfindung ist dabei die Erstreckung im Wesentlichen parallel zu den Filamenten der Borstenbündel anzusehen.

Ein Bürstenkopf mit den oberbegrifflichen Merkmalen von Anspruch 1 ist aus der EP 2 599 403 bekannt. Bei diesem Bürstenkopf ist das Halteteil als Zapfen zum Verbinden des Bürstenkopfes mit einem Antriebselement des Aufsteckteils verbunden. Das Halteteil dient dementsprechend zuvorderst der Vermittlung eines üblicherweise reversierend aufgebrachten Antriebsmomentes, durch welches der Bürstenkopf um seine Schwenkachse verschwenkt wird. Dieses Halteteil ist mit einem plattenförmig ausgebildeten Trägerteil verbunden, welches mittels Inmold-Technik daran befestigte und durch Borstenfilamente gebildete Borstenbündel trägt. Bei dem Inmold-Verfahren werden die Borstenbündel endseitig zur Ausbildung einer Verdickung angeschmolzen. Sie durchragen in dieser Weise vorbereitet ein Formnest, in welches eine das Trägerteil ausbildende Kunststoffkomponente eingespritzt wird. Der vorbekannte Bürstenkopf trägt des Weiteren weichelastische Reinigungselemente. Diese sind befestigungsseitig mit einem aus Kunststoff gebildeten Befestigungsfuß verbunden, der einen verbreiterten Verankerungskopf ausformt, welcher eine Durchgangsbohrung durchragt und nach Art eines Schnappverschlusses hinter dieser verriegelt. Der Verankerungskopf ist in einer verbreiterten, rückseitig an dem Trägerteil offenen Rastaufnahme aufgenommen. Diese Befestigung des weichelastischen Reinigungselementes an dem Bürstenkopf erlaubt eine gewisse Verschwenkbarkeit des weichelastischen Reinigungselementes relativ zu dem Trägerteil.

Die Ausgestaltung ist indes nachteilig, da der Verankerungskopf eine gewisse Höhe des Trägerteils erforderlich macht, was dem Bedürfnis einer möglichst in der Höhe gering aufbauenden Bürste entgegensteht. Des Weiteren können sich in der rückseitig offenen Rastaufnahme Bakterien oder Verschmutzung einnisten. Auch erfordert das Hindurchführen des Verankerungskopfes durch die an dem Trägerteil ausgebildete Durchgangsbohrung eine gewisse Toleranz, sodass sich innerhalb der Durchgangsbohrung und zwischen dem Trägerteil und dem Befestigungsfuß Keime bzw. Verschmutzung einnisten können, was den hygienischen Anforderung widerspricht, die an einen Bürstenkopf einer Zahnbürste zu stellen sind. Weitere Beispiele für Bürstenköpfe elektrisch angetriebener Zahnbürsten sind in EP 2 599 403 A1 und EP 3 165 126 A1 (dieses Dokument fällt unter Art. 54(3) EPÜ) offenbart.

Der vorliegenden Erfindung liegt das Problem zugrunde, einen verbesserten Bürstenkopf für eine elektrisch angetriebene Zahnbürste und einen zur Herstellung eines solchen Bürstenkopfes geeignetes Verfahren anzugeben.

Zur Lösung des vorrichtungsmäßigen Problems wird mit der vorliegenden Erfindung ein Bürstenkopf mit den Merkmalen von Anspruch 1 angegeben. Bei diesem Bürstenkopf hat das Trägerteil Durchgangsbohrungen, die jeweils von dem Borstenbündel und dem weichelastischen Reinigungselement durchragt sind. Dabei weist der erfindungsgemäße Bürstenkopf zumindest ein Borstenbündel und zumindest ein weichelastisches Reinigungselement auf. Üblicherweise sind zu jedem dieser Reinigungselemente Durchgangsbohrungen vorgesehen. Eines der Borstenbündel ist dementsprechend in einer diesem Bündel zugeordneten Durchgangsbohrung aufgenommen. Eines der weichelastischen Reinigungselemente ist in einer anderen, dem jeweiligen Reinigungselement zugeordneten Durchgangsbohrung vorgesehen. Es ist aber auch möglich, ein Borstenbündel zusammen mit einem weichelastischen Reinigungselement in einer einzigen Durchgangsbohrung vorzusehen. In diesem Fall teilen sich das Borstenbündel und das weichelastische Reinigungselement eine gemeinsame Durchgangsbohrung.

Erfindungsgemäß ist das Borstenbündel und das weichelastische Reinigungselement formschlüssig an dem Trägerteil festgelegt. Diese Festlegung erfolgt durch eine Verdickung, die durch das Filamentmaterial gebildet sein kann, wie dies aus dem Inmold-Verfahren allgemein bekannt ist. Allerdings wird entgegen dem an sich bekannten Inmold-Verfahren üblicherweise das Trägerteil zunächst mit Durchgangsbohrungen vorbereitet und danach erst mit dem Borstenbündel bzw. dem weichelastischen Reinigungselement versehen. Zur formschlüssigen Festlegung des Borstenbündels gegenüber dem Trägerteil kann das Trägerteil zunächst mit dem Borstenbündel bestopft und danach das Borstenbündel an seinem befestigungsseitigen Ende angeschmolzen werden. Dabei bildet sich eine Verdickung aus, durch welche das Borstenbündel formschlüssig gegenüber dem Trägerteil festgelegt und gegen eine Rückseite des Trägerteils angelegt wird. Vielmehr noch kann aber das Filamentmaterial schmelzflüssig gegen eine Öffnung zu der entsprechenden Durchgangsbohrung angelegt und dementsprechend diese Öffnung durch schmelzflüssiges Verbinden des Filamentmaterials mit dem Material des Trägerteils versiegelt werden. Diese Verfahrensführung verhindert, dass beim nachfolgenden rückseitigen Hinterspritzen des so vorbereiteten Trägerteils schmelzflüssiger Kunststoff in die Durchgangsbohrung gelangt.

In entsprechender Weise kann beispielsweise ein Vorformling eines weichelastischen Reinigungselementes in die Durchgangsbohrung eingebracht und danach an seinem befestigungsseitigen Ende zur Ausbildung der Verdickung erwärmt werden. Der Vorformling kann dabei beispielsweise als zylindrischer Stab ausgebildet sein. Dieser Vorformling kann beispielsweise lediglich warmverstemmt werden. Bei diesem Verfahren wird das weichelastische Material lediglich erweicht und dann plastisch zur Ausbildung der Verdickung verformt.

Alternativ kann das Trägerteil mit einem vorgefertigten weichelastischen Reinigungselement bestopft werden. Hierbei hat das vorgefertigte weichelastische Reinigungselement bereits eine befestigungsseitig vorgesehene Verdickung. So wird das vorgefertigte weichelastische Reinigungselement üblicherweise von der Rückseite des Trägerteiles durch die Durchgangsbohrung hindurch geschoben, bis die Verdickung rückseitig gegen das Trägerteil anliegt. Dabei können das vorgefertigte weichelastische Reinigungselement und das üblicherweise mittels Spritzgießen hergestellte Trägerteil Dichtungskonturen aufweisen, die ineinander eingreifen, gegebenenfalls miteinander verrasten, um eine Abdichtung der Öffnung zu der Durchgangsbohrung zu erreichen. So kann eine Art Labyrinthdichtung zwischen dem Trägerteil und dem weichelastischen Reinigungselement im Bereich der Durchgangsbohrung zu dem entsprechenden Reinigungselement ausgebildet werden. Da das weichelastische Reinigungselement eine hohe Elastizität hat, kann durch Andrücken des Reinigungselementes gegen das Trägerteil die entsprechende Labyrinthdichtung wirksam hergestellt und das weichelastische Reinigungselement gegenüber dem Trägerteil dichtend angelegt werden, sodass die Durchgangsbohrung abgedichtet ist.

Bei einer alternativen Verfahrensführung kann das weichelastische Material, durch welches das weichelastische Reinigungselement gebildet wird, zur Ausbildung des weichelastischen Reinigungselementes schmelzflüssig durch die Durchgangsbohrung hindurch gespritzt werden. Dieser Verfahrensschritt kann entweder vor oder nach dem Bestopfen des Borstenbündels erfolgen. Gegen die Rückseite des Trägerteiles wird hierzu üblicherweise ein Formnest angelegt, welches eine zur Ausbildung der Verdickung geeignete Kavität ausbildet. Auf der gegenüberliegenden Seite des üblicherweise aus Kunststoff vorgefertigten Trägerteils ist eine Kavität vorgesehen, die der schmelzflüssigen Abformung des reinigungsaktiven Bereiches des weichelastischen Reinigungselementes dient. Dieses ist üblicherweise stabförmig ausgeformt, also zylindrisch, bevorzugt mit kreisrundem Querschnitt. Es sind aber auch rechteckige oder polygonale bzw. ovale Querschnitte denkbar. Nach dem Spritzgießen des weichelastischen Materials ist das weichelastische Reinigungselement mit der Verdickung versehen und so zumindest formschlüssig, bevorzugt formschlüssig und stoffschlüssig, mit dem Trägerteil verbunden.

Mehrere weichelastische Reinigungselemente können eine einheitliche bzw. gemeinsame Verdickung aufweisen, die durch Spritzgießen, Umformen bzw. Warmverstemmen oder durch das Vorfertigen von mehreren weichelastischen Reinigungselementen mit einer gemeinsamen Verdickung hergestellt werden können. Durch diese Verdickung sind die Reinigungselemente miteinander verbunden.

Das Abdichten der Durchgangsbohrung durch das Filamentmaterial bzw. das weichelastische Material ist nicht notwendiges Merkmal der vorliegenden Erfindung, gleichwohl aber zu bevorzugen. Ein mit dem weichelastischen Reinigungselement und dem Borstenbündel versehenes Trägerteil kann beispielsweise rückseitig unmittelbar mit dem Halteteil mittels Spritzgießen verbunden werden, um einen in der Höhe möglichst kompakt bauenden Bürstenkopf zu erzeugen. Das Halteteil besteht regelmäßig aus einem technischen Kunststoff und hat eine hohe Viskosität, was es notwendig macht, das Halteteil mit relativ hohen Drücken in die Spritzgießform einzuspritzen. Das Halteteil kann einen einteilig an dem Halteteil ausgeformten Teller ausbilden, dessen Oberfläche sich im Wesentlichen bevorzugt parallel zu der Oberfläche des Trägerteils erstreckt. Zwischen Halteteil und Trägerteil kann eine Kunststoffmasse eingebracht sein, die aushärtet, um das Trägerteil und das Halteteil miteinander zu verbinden. Diese Kunststoffmasse kann beispielsweise mittels Spritzgießen eingebracht werden. Das Aushärten erfolgt bei dieser Verfahrensführung bevorzugt beim Erkalten der Kunsstoffschmelze. Die Kunststoffmasse kann ebenso gut ein Kleber sein, der aushärtet bzw. abbindet. Sofern das Halteteil mit einem Teller versehen ist, schließt die Oberfläche dieses Tellers bevorzugt zusammen mit der rückseitigen Oberfläche des Trägerteils einen Spalt ein, der mit der Kunststoffmasse ausgefüllt wird, um das Trägerteil mit dem Halteteil zu verbinden.

Bei der erfindungsgemäßen Ausgestaltung des Bürstenkopfes als Bürstenkopf einer elektrisch angetriebenen Zahnbürste hat ein Halteteil zumindest ein Anschlusselement für die mechanische Kopplung des Bürstenkopfes an den elektrischen Antrieb der Zahnbürste. Das Halteteil weist einen bevorzugt einseitig daran vorgesehenen Zapfen auf, der eine Dreh- bzw. Schwenkachse des Bürstenkopfes definiert. Üblicherweise befindet sich dieses Halteteil ganz oder teilweise innerhalb des zuvor erwähnten Hülsenelementes des Aufsetzteiles und ist darin so aufgenommen, dass der Bürstenkopf relativ zu dem Hülsenelement eine Dreh- bzw. Schwenkbewegung durchführen kann, indes unverlierbar mit dem Hülsenelement gekoppelt ist. Als Anschlusselement für die mechanische Kopplung des Bürstenkopfes an den elektrischen Antrieb ist im einfachsten Fall eine Aufnahme an den Zapfen ausgespart, in welche die Antriebswelle des Aufsteckteils eingreift, um beispielsweise dem Bürstenkopf eine zyklische Schwenkbewegung relativ zu dem Hülsenelement aufzuprägen. Das Anschlusselement befindet sich in diesem Fall an der Außenumfangsfläche des Halteteils, d. h. ist mit einer Erstreckung rechtwinklig zu der durch das Halteteil vorgegebenen Schwenkachse an dem üblicherweise zylindrischen Zapfen ausgespart. An seinem freien Ende weist der Zapfen üblicherweise eine Zentrierbohrung auf, die mit einem Zentrierzapfen des Hülsenelementes zusammenwirkt, um eine Lagerung für die Schwenkbewegung des Bürstenkopfes zu definieren. An der dem Anschlusselement üblicherweise gegenüberliegenden Seite hat der Zapfen regelmäßig eine Arretierausnehmung, in welche ein fest mit dem Hülsenelement verbundener Arretierstift eingreift, um den Bürstenkopf innerhalb des Hülsenelementes so zu fixieren, dass sich der Bürstenkopf nicht entlang der Schwenkachse aus einer an dem Hülsenelement ausgebildeten Aufnahme für den Zapfen ziehen lässt. Bevorzugt weist die in dem Hülsenelement vorgesehene Welle zur Kopplung mit dem Zapfen einen im Wesentlichen zylindrischen Verriegelungskopf auf, dessen Zylinderachse sich annähernd parallel zu der Schwenkachse des Verriegelungszapfens erstreckt. Zur Aufnahme dieses Verriegelungszapfens hat der zentrische Zapfen üblicherweise eine exzentrisch zu der Schwenkachse, jedoch mit paralleler Erstreckung hierzu vorgesehene Verriegelungszapfenaufnahmen.

Die zuvor diskutierten Elemente des Zapfens befinden sich nach Montage desselben an dem Hülsenelement üblicherweise innerhalb des Hülsenelementes.

Der zentrische Zapfen wird bevorzugt radial von dem Teller überragt, der als Bestandteil des Halteteiles vorgesehen ist. Das Halteteil wird dementsprechend gebildet aus dem zentrischen Zapfen und dem Teller. Der Teller hat üblicherweise eine Grundfläche, die der Grundfläche der von den Reinigungselementen des Bürstenkopfes durchragten Oberfläche des Bürstenkopfes im Wesentlichen entspricht und/oder parallel dazu verläuft. Diese Oberfläche kann kreisrund oder oval sein. Jedenfalls wird die Grundfläche der Oberfläche, d. h. die Kontur derselben, mit einem konvexen umlaufenden Rand gewählt, um die sensiblen Mundschleimhäute maximal vor Beschädigung zu schützen.

Das Trägerteil hat bevorzugt eine Grundfläche, die der von dem Borstenbündel durchragten Oberfläche entspricht. Regelmäßig bildet das bevorzugte scheibenförmige Trägerteil diese Oberfläche aus, d. h. formt den oberen Abschluss des Bürstenkopfes aus. Das Trägerteil ist vorzugsweise scheibenförmig, d. h. hat im Wesentlichen koplanare Hauptflächen, wobei die eine üblicherweise die Oberfläche des Bürstenkopfes ausbildet und die andere gegenüberliegend zu dem Teller und regelmäßig mit paralleler Erstreckung hierzu vorgesehen ist und eine Anlagefläche für die Verdickungen der Reinigungselemente bildet. Das Trägerteil ist bevorzugt als verhältnismäßig dünne Scheibe mit einer Stärke von zwischen 0,5 und 3,0 mm ausgebildet. Der Teller kann korrespondierend zu der Lage der jeweiligen Verdickung eine Ausnehmung aufweisen, welche die entsprechende Verdickung aufnimmt, was eine kompakte Ausgestaltung des Bürstenkopfes fördert.

Das Trägerteil ist mit dem Halteteil regelmäßig so verbunden, dass zwischen dem Trägerteil und dem Teller kein sich in Höhenrichtung erstreckender Spalt verbleibt. Das Trägerteil kann unmittelbar an dem Teller anliegen. Dabei sind das Trägerteil und das Halteteil üblicherweise als zwei zunächst separat hergestellte Bauteile ausgeformt und nachträglich gefügt. Diese Verbindung kann mittels Schweißen, zum Beispiel Ultraschall oder Reibschluss-Schweißen bewirkt werden.

Beim Fügen mittels Spritzgießen werden zunächst der Borstenträger und das Halteteil zum Fügen der beiden zunächst separat hergestellten Bauteile in eine Spritzgussform eingesetzt und auf Abstand zueinander gehalten, so dass die Verdickung des Borstenbündels und des weichelastischen Reinigungselementes sich zwischen der Oberseite des Halteteils, bevorzugt des Tellers desselben, und der Unterseite des Trägerteils befinden, bevorzugt gegen die Durchgangsbohrung dichtend anliegen. In den zwischen den beiden Teilen verbleibenden Spalt wird dann Kunststoffmasse eingespritzt, die den Spalt vollständig ausfüllt und das Trägerteil mit dem Halteteil verbindet. Die dabei ausgebildete Zwischenschicht befindet sich als Umspritzung bevorzugt nicht nur zwischen dem Trägerteil und dem Halteteil bzw. Teller. Sie kann auch den Teller und/oder das Trägerteil umfänglich ganz oder teilweise umgeben. Hierdurch kann beispielsweise eine Stoßkante aus einem anderen Material hergestellt werden, welches das Trägerteil und das Halteteil umfänglich umgibt und die Außenkontur vorgibt. Das eingespritzte Material ist üblicherweise ein thermoplastischer Kunststoff. Dieser Kunststoff kann ein weichelastisches Material beispielsweise TPE sein. Alternativ kann das eingespritzte Material durch eine Hartkomponente gebildet werden, beispielsweise PP, PE, PA, POM, PC oder PBT. Zu bevorzugen ist grundsätzlich ein leichtfließender Kunststoff, bevorzugt ein Kunststoff mit einem MFI > 15 g/10 min bei 2,16 kg und einer dem Kunststoff entsprechenden Prüftemperatur. Es ist ferner möglich, dem eingespritzten Material einen Zusatz beizufügen, welcher eine reinigende oder polierende Wirkung hat, so dass durch den Außenumfang des Bürstenkopfes die Zähne oder Gewebebereiche innerhalb des Mundraumes schonend gereinigt werden können.

Gemäß einer weiteren bevorzugten Ausgestaltung der vorliegenden Erfindung über- bzw. untergreift der in den Zwischenraum eingebrachte Kunststoff das Trägerteil bzw. den Teller des Halteteils. Dabei ist üblicherweise auf eine Ausgestaltung zu achten, bei welcher auch der in den Zwischenraum eingebrachte Kunststoff absatzfrei und kontinuierlich in eine Oberfläche des Trägerteils bzw. des Halteteiles übergeht. So kann das Trägerteil einen radialen Vorsprung bzw. radial umlaufenden Rand aufweisen, der mit Abstand zu der Oberfläche des Trägerteils vorgesehen ist und von dem in den Zwischenraum eingespritzten Kunststoff übergriffen ist, um das Trägerteil auch formschlüssig gegenüber dem Halteteil festzulegen. Ähnlich kann der in den Zwischenraum eingespritzte Kunststoff auch an der Unterseite des Tellers vorgesehen sein. Auch der Teller kann hierzu einen radialen Vorsprung ausbilden, der von dem erstarrten, in den Zwischenraum eingebrachten Kunststoff untergriffen wird, um den in den Zwischenraum eingebrachten Kunststoff auch formschlüssig in Richtung der Schwenkachse mit dem Halteteil zu verbinden.

Mit Blick auf eine möglichst solide Verbindung ist es zu bevorzugen, den in den Zwischenraum eingebrachten Kunststoff radial bis an den Zapfen heranzuführen, so dass der in den Zwischenraum eingebrachte Kunststoff im Wesentlichen die Rückseite des Tellers abdeckt und die Unterseite des verbreiterten Teils des Bürstenkopfes ausformt, der den üblicherweise zylindrischen Zapfen radial zu der Schwenkachse überragt. Der Teller und das Trägerteil können dabei mit identischer Grundfläche ausgebildet sein, wobei sich der in dem Zwischenraum eingebrachte Kunststoff eben auf jenen Zwischenraum beschränkt. Umgibt der in den Zwischenraum eingebrachte Kunststoff das Trägerteil bzw. den Teller umfänglich, so wird die äußere Kontur des verbreiterten Teils unter anderem auch, üblicherweise ausschließlich durch den in den Zwischenraum eingebrachten Kunststoff definiert. Der in den Zwischenraum einbrachte Kunststoff kann sich aber auch lediglich unterhalb des Trägerteils befinden, so dass dieser allein die von den Borstenbündeln durchragte Oberfläche definiert und rückseitig von dem Teller und dem in den Zwischenraum eingespritzten Kunststoff hinterlegt ist, der den Teller auch rückseitig umschließen kann, um das Trägerteil formschlüssig auch in Richtung der Schwenkachse mit dem Halteteil zu verbinden.

Mit Blick auf eine möglichst einfache Herstellung des erfindungsgemäßen Bürstenkopfes wird gemäß einer bevorzugten Weiterbildung der vorliegenden Erfindung vorgeschlagen, dass das Trägerteil bzw. dessen Teller und/oder das Halteteil einen den Zwischenraum vorgebenden Abstandshalter ausbildet. Der entsprechende Abstandshalter ist üblicherweise einstückig an dem Trägerteil bzw. dem Teller ausgeformt. Der Abstandshalter ragt in Richtung der Schwenkachse von dem Trägerteil bzw. dem Halteteil ab und liegt mit seinem freien Ende an einer Gegenfläche an, die von dem Trägerteil bzw. dem Teller ausgebildet wird. Der bzw. die Abstandshalter können sowohl an dem Trägerteil als auch dem Halteteil vorgesehen sein, um den Zwischenraum vorzugeben. Bei der Herstellung des Bürstenkopfes werden die vorgefertigten Teile Trägerteil und Halteteil dementsprechend in der Spritzgießform über die Abstandshalter auf Abstand gehalten, sind indes bereits gegeneinander verpresst, was zu einer gewissen Verformung der Abstandshalter führen kann. Der aber immer verbleibende Zwischenraum wird beim Umspritzen mit dem in den Zwischenraum eingebrachten Kunststoff ausgefüllt, so dass nicht zuletzt aufgrund der Abstandshalter ein Bürstenkopf mit vorbestimmten Abmessungen hergestellt werden kann.

Die Höhe des Zwischenraumes entspricht vorzugsweise in etwa der Größe der Verdickung, um eine möglichst kompakte Höhe des Bürstenkopfes einzustellen. Dieses Kriterium wird bereits dann erfüllt, wenn die Höhe 100 bis 200 % der höhenmäßigen Erstreckung der Verdickung entspricht. Das Trägerteil und/oder das Halteteil sind üblicherweise mit runder oder ovaler Grundfläche ausgebildet. Die einander gegenüberliegenden Hauptseitenflächen von Trägerteil und Halteteil sind üblicherweise im Wesentlichen flach und in der Regel parallel zueinander vorgesehen. Lediglich die zuvor erwähnten Abstandshalter überragen die einander gegenüberliegenden Flächen von Halteteil bzw. Trägerteil. Die von den Borstenbündeln bzw. weichelastischen Reinigungselementen durchragte Oberfläche des Trägerteils bildet üblicherweise zwischen 90 und 100%, bevorzug 30 bis 60% der Oberfläche des Bürstenkopfes aus. Rand- und Zwischenabstände nehmen bevorzugt zwischen 40 und 70% der Oberfläche des Bürstenkopfes ein. Diese Oberfläche des Bürstenkopfes ist in der Regel kreisförmig oder oval ausgebildet.

Die lichte Höhe eines gegenüber einem Zapfen verbreiterten Teils des Bürstenkopfes beträgt üblicherweise zwischen 2,5 und 5,0 mm. Dabei bildet der Zapfen eine Schwenkachse, ggf. auch Antriebsflächen zum Antrieb des Bürstenkopfes aus, sofern dieser in eine elektrisch angetriebene Zahnbürste eingebaut ist.

Gemäß einer weiteren bevorzugten Ausgestaltung der vorliegenden Erfindung sind an der Rückseite des Halteteils bzw. des Tellers, d. h. auf der dem Trägerteil abgewandten Seite, Noppen vorgesehen, die bevorzugt einteilig an dem Halteteil ausgeformt sind. Die freien Enden dieser Noppen liegen an der Unterfläche des Bürstenkörpers frei. Die Noppen erstrecken sich üblicherweise parallel zur Schwenkachse. Die zuvor erwähnten Noppen dienen ebenfalls der Positionierung des Halteteils bzw. des Tellers in einer Spritzgießform derart, dass der in den Zwischenraum eingebrachte Kunststoff die Unterseite des Halteteils umfließen und dort erstarren kann, so dass diese Unterseite im Wesentlichen vollständig von dem in den Zwischenraum eingebrachten Kunststoff ausgebildet wird und lediglich die Noppen mit ihren freien Enden an dieser Unterfläche freiliegen. Damit wird eine vorgegebene Schichtdicke des in den Zwischenraum eingebrachten Kunststoffs an der Unterseite des Bürstenkopfes auf einfache Weise vorgegeben. Durch die Noppen wird der dazu in dem Spritzgießwerkstoff notwendige Abstand zuverlässig und einfach eingestellt. Die Noppen befinden sich dabei üblicherweise radial innerhalb eines äußeren Randes des Halteteils bzw. des Tellers, so dass dieser randseitig relativ dünn ausgestaltet und von dem in den Zwischenraum eingebrachten Kunststoff umgeben sein kann.

Die zuvor erwähnten Abstandshalter und/oder Noppen sind üblicherweise in Umfangsrichtung auf der Ober- bzw. Unterfläche von Borstenträger und/oder Halteteil bzw. Teller verteilt vorgesehen.

Die vorliegende Erfindung betrifft ferner ein Aufsteckteil für eine elektrische Zahnbürste mit einem Hülsenelement, einer darin vorgesehenen Antriebswelle, die mit einem Antrieb der elektrischen Zahnbürste koppelbar ist, und einem Bürstenkopf nach der vorliegenden Erfindung. Der Bürstenkopf ist dabei mit der Antriebswelle gekoppelt. Das Hülsenelement weist an seinem dem Bürstenkopf gegenüberliegenden Ende mechanische Anschlussmöglichkeiten zur Halterung des Aufsteckteiles an dem Handstück der elektrischen Zahnbürste auf. Des Weiteren ist die Antriebswelle endseitig so ausgebildet, dass beim Aufstecken des Hülsenelementes auf das Gehäuse des Handteils der elektrischen Zahnbürste die Antriebswelle mit der Antriebswelle des Handteiles gekoppelt wird, um die Drehbewegung der Antriebswelle auf den Bürstenkopf zu übertragen. Dabei wird der Bürstenkopf üblicherweise verschwenkt, d. h. die Antriebswelle ist nicht rotierend angetrieben, sondern wird lediglich um einen gewissen Winkelbereich zyklisch verschwenkt.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Fig. 1: eine perspektivische, teilweise geschnittene Darstellung eines ersten Ausführungsbeispiels der vorliegenden Erfindung;
- Fig. 2: eine Querschnittsansicht eines zweiten Ausführungsbeispiels;
- Fig. 3: eine Querschnittsansicht eines dritten Ausführungsbeispiels;
- Fig. 4: eine Querschnittsansicht eines vierten Ausführungsbeispiels;
- Fig. 5: eine Querschnittsansicht eines fünften Ausführungsbeispiels;
- Fig. 6: eine Querschnittsansicht durch ein Ausführungsbeispiels eines Trägerteils vor dem Verbindung mit dem Halteteil;

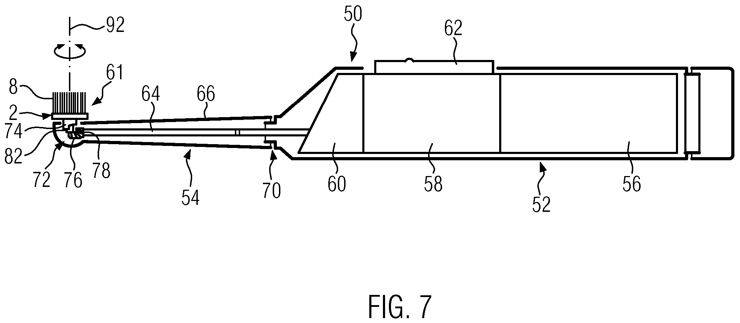

- Fig. 7: eine schematische Darstellung einer elektrischen Zahnbürste;
- Fig. 8: eine Schnittansicht des Bürstenkopfes der elektrischen Zahnbürste nach Fig. 7;
- Fig. 9: eine perspektivische Darstellung eines Antriebszapfens der elektrischen Zahnbürste nach den Fig. 7 und 8 und
- Fig. 10: eine Querschnittsansicht des Antriebszapfens gemäß Fig. 9 mit der Nabe im gefügten Zustand.

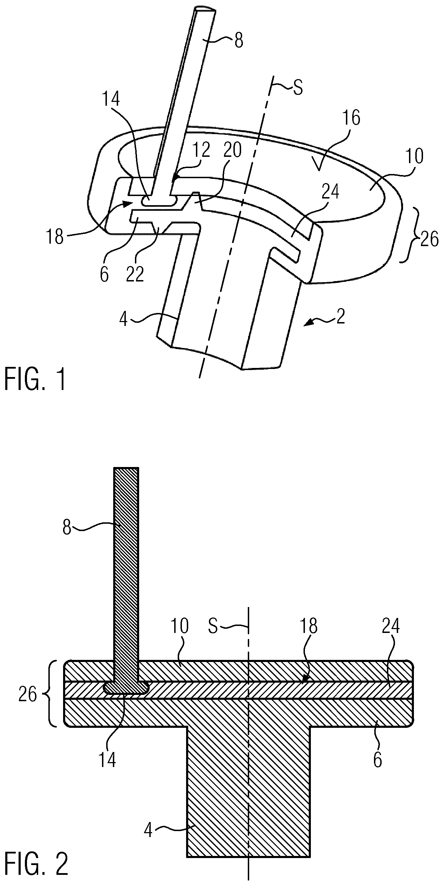

Die Figuren geben jeweils schematisch die Ausführungsbeispiele wieder. Mit Bezugszeichen 2 ist ein Halteteil gekennzeichnet, welches einen Zapfen 4 und einen davon radial abragenden und einteilig an dem Zapfen 4 vorgesehenen Teller 6 ausformt. Ein Borstenbündel 8 durchragt eine in einem Trägerteil 10 vorgesehene Durchgangsbohrung 12 und liegt mit seiner Verdickung 14 an der Rückseite des Trägerteils 10 gegen diesen an. Zur Vereinfachung der Darstellung ist in Fig. 1 lediglich ein Borstenbündel 8 dargestellt. Es versteht sich von selbst, dass die gesamte, von dem Trägerteil 10 ausgebildete Oberfläche 16 von Borstenbündeln 8 oder anderen Reinigungselementen speziell aber von weichelastischen Reinigungselementen überragt ist, um eine möglichst vollflächige Reinigungswirkung zu erzielen. Die Borstenbündel und die Reinigungselemente können unterschiedliche Durchmesser, Farben, stoffliche Beschaffenheiten und Konturierungen sowie unterschiedliche Borstenfilamente und unterschiedliche Anzahl von Borstenfilamenten haben, wie dies im Markt üblich ist. Als weichelastisches Reinigungselement kommt bevorzugt ein Reinigungselement aus einem thermoplastischen Elastomer in Frage. Das weichelastische Reinigungselement erstreckt sich bevorzugt im Wesentlichen parallel zu dem oder den Borstenbündeln 8.

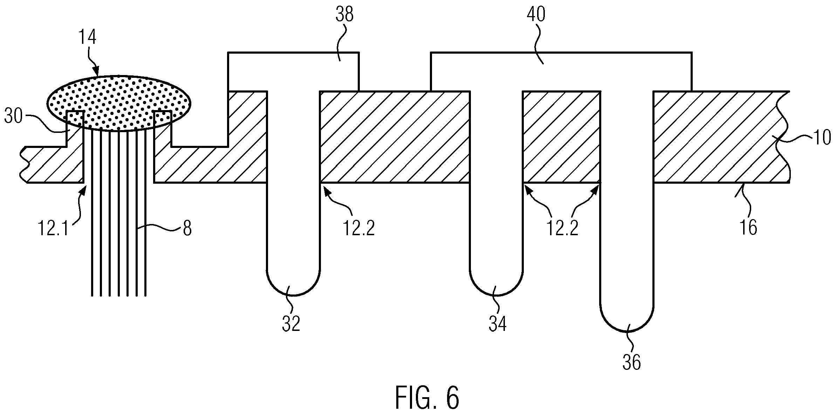

Die Fig. 1 bis 5 verdeutlichen verschiedene Beispiele zur Anordnung des Trägerteils 10 relativ zu dem Halteteil 2. Details zu den Reinigungselementen, die in den Durchgangsbohrungen 12 des Trägerteils 10 gehalten sind, sind in Fig. 6 und der zugehörigen Beschreibung abgehandelt.

Fig. 6 und die zugehörige Beschreibung verdeutlichen Beispiele für Borstenbündel bzw. weichelastische Reinigungselemente und deren Ausbildung.

Bezugszeichen 18 kennzeichnet einen Zwischenraum, der zwischen der Unterseite des Trägerteils 10 und der Oberseite des Tellers 6 eingeschlossen ist. In diesem Zwischenraum 18 ragt ein von dem Teller abragender Abstandshalter 20 hinein, der gegen die Unterseite des Trägerteils 10 anliegt und diesen mit einem vorgegebenen Abstand zu dem Teller 6 hält. In Fig. 1 ist lediglich ein solcher Abstandshalter 20 dargestellt, wenngleich von der Oberfläche des Tellers 6 mehrere solcher Abstandshalter 20 abragen, um das Trägerteil 10 punktuell, jedoch an unterschiedlichen Positionen gegenüber dem Teller 6 zu halten und abzustützen.

Von der Unterseite des Tellers 6 ragt ein Noppen 22 ab. Auch von diesem Noppen 22 sind auf der Unterseite des Tellers 6 mehrere vorgesehen und einteilig daran angeformt.

Mit Bezugszeichen 24 ist ein in den Zwischenraum 18 eingespritzter Kunststoff gekennzeichnet. Dieser füllt den Zwischenraum 18 vollständig aus. Der Kunststoff 24 umgibt ferner das Trägerteil 10 umfänglich, endet indes auf der Oberfläche 16 flächenbündig mit dem Trägerteil 10. Der Kunststoff 24 umgibt auch die Unterseite des Tellers 6 und ragt radial bis an den Zapfen 4 heran. Durch diese Ausgestaltung ist ein mit Bezugszeichen 26 gekennzeichneter verbreiteter Teil des Bürstenkopfes nach Art einer Scheibe ausgeformt, die sich zusammensetzt aus dem Trägerteil 10, dem Teller 6 sowie der Umspritzung durch den Kunststoff 24. Die Kanten der Scheibe sind jeweils abgerundet. Der Kunststoff 24 ist vorliegend ein leicht fließendes thermoplastisches Elastomer, welches nicht nur das Trägerteil 10 und den **Teller 6 miteinander** verbindet, sondern darüber hinaus auch eine außenseitige Begrenzung der Scheibe aus einem relativ weichen Werkstoff ausformt, der die empfindlichen Mundschleimhäute besser schont als ein härterer Kunststoff.

Aus einem technischen Kunststoff ist das Halteteil 2 ausgebildet. Ein technischer Kunststoff hat eine hohe Verschleißfestigkeit und ein hohes E-Modul, von zumindest 1500 MPa. Die Viskosität eines solchen technischen Kunststoffes ist relativ hoch. Der MFI eines technischen Kunststoffes der vorliegenden Erfindung liegt bei ≤ 20 g/10 min bei dem Kunststoff entsprechende Prüftemperatur und 2,16 kg Belastung. Ein technischer Kunststoff ist insbesondere POM, PA, PC bzw. PBT. Aus einem solchen Werkstoff ist das Halteteil 2 gebildet. Dabei hat der Zapfen 4 üblicherweise die in der allgemeinen Beschreibung vorgestellten Anschlüsse Halterungen und Zentrierungen, mit welcher das gezeigte Ausführungsbeispiel in einem nicht gezeigten Hülsenelement eines Aufsteckteiles für eine elektrische Zahnbürste gehalten und mechanisch mit dem Antrieb koppelbar ist.

Bei dem gezeigten Ausführungsbeispiel kann der Kunststoff 24 eine Haftung zwischen dem Trägerteil 10 und dem Halteteil 2 aus dem technischen Kunststoff vermitteln. Der Borstenträger kann dabei aus einer Hartkomponente gebildet sein, beispielsweise PA, PET, PP, PE, POM, PC bzw. PBT.

Das in Fig. 1 gezeigte Ausführungsbeispiel geht davon aus, dass für die zuverlässige Befestigung des Kunststoffs 24 an dem Halteteil 2 ein Formschluss notwendig ist. So erstreckt sich der Kunststoff 24 auch auf der Unterseite des Tellers und bildet dementsprechend die Unterfläche des verbreiterten Teils 26 aus, die von dem Zapfen 4 durchragt ist. Die stoffliche Beschaffenheit des Trägerteils 10 ist hingegen so, dass der Kunststoff 24 allein stoffschlüssig sicher an dem Trägerteil 10 angebunden werden kann. Der Kunststoff 24 umgibt indes das Trägerteil 10 allein umfänglich.

Zur Herstellung des in Fig. 1 gezeigten Ausführungsbeispiels wird zunächst das Trägerteil 10 mittels Spritzengießen aus Kunststoff hergestellt, wobei beim Spritzgießen die Durchgangsbohrung 12 bzw. die Bohrungen ausgeformt werden. Danach wird das Trägerteil 10 mit den Borstenbündeln 8 bestopft, deren befestigungsseitiges Ende zunächst mit Abstand zu dem Trägerteil 10 angeordnet und angeschmolzen wird. Danach wird das Borstenbündel 8 axial verschoben, um die beim Anschmelzen ausgebildete Verdickung 14 gegen die Unterseite des Trägerteils anzulegen.

Das Halteteil 2 wird mittels Spritzgießen aus dem technischen Kunststoff in Endkontur mit allen Funktionsflächen an den Zapfen vorbereitet. Die beiden vorbereiteten Bauteile 2 und 10 werden in eine Spritzgussform eingelegt. Dabei wird das Halteteil 2 der einen Werkzeughälfte und das Trägerteil 10 der anderen Werkzeughälfte zugeordnet. Das Trägerteil 10 wird dabei üblicherweise mit einer sogenannten Lochfeldplatte gehalten, die üblicherweise außerhalb der Spritzgussform mit dem Trägerteil 10 versehen und danach zur Komplettierung der Spritzgussform in diese eingesetzt wird. Beim Schließen der Spritzgießform werden die Abstandshalter 20 gegen die Unterseite des Trägerteils 10 angelegt und dabei geringfügig komprimiert. Der verbleibende Zwischenraum 18 wird mit dem dann eingespritzten Kunststoff 24 gefüllt. Durch die Noppen 22 ist auch die ansonsten ebene Rückseite des Tellers 6 mit Abstand zu der Spritzgussform gehalten, so dass dort ein Spalt freigelassen wird, der durch den Kunststoff 24 ausgefüllt wird, um die rückseitige Umspritzung des Tellers mit dem Kunststoff 24 auszuformen. Nach hinreichendem Erkalten des Kunststoffs 24 wird das Formnest geöffnet und das in Fig. 1 schematisch dargestellte fertige Erzeugnis entnommen.

Die Fig. 2 zeigt im Querschnitt eine Grundform der vorliegenden Erfindung. Gleiche Bauteile sind gegenüber dem zuvor beschriebenen Ausführungsbeispiel mit gleichen Bezugszeichen gekennzeichnet. Dies gilt für sämtliche Figuren der Zeichnung.

Bei der Grundform nach Fig. 2 ist der Zwischenraum 18 durch den Kunststoff 24 ausgefüllt. Der Kunststoff 24 endet bündig an einer Außenumfangsfläche des verbreiterten Teils 26, der oben durch den Rand des Trägerteils 10, unten durch den Rand des Tellers 6 und dazwischen durch den Kunststoff 24 ausgebildet wird.

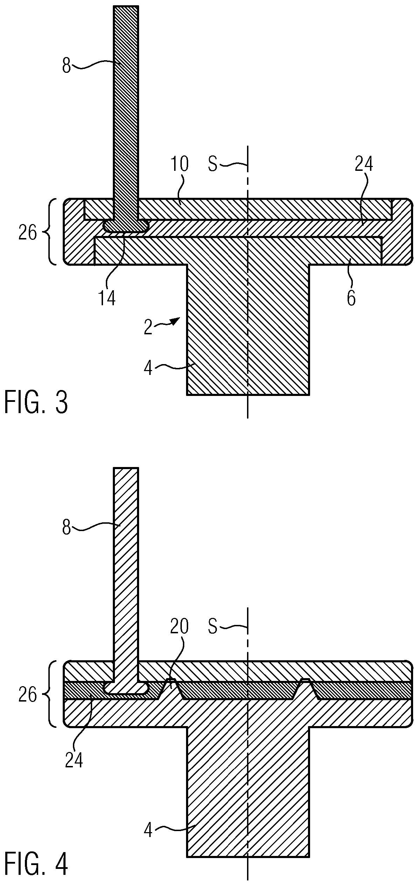

Bei dem Ausführungsbeispiel nach Fig. 3 hat der Teller 6 gegenüber Fig. 2 eine geringere radiale Erstreckung als das Trägerteil 10. Der Kunststoff 24 umgibt umfänglich sowohl das Trägerteil 10 als auch den Teller 6, trägt indes nichts zu einer höheren Dicke oberhalb der Oberfläche 16 bzw. unterhalb der Unterseite des Tellers 6 bei. Der Kunststoff 24 ist lediglich Stoßschutz, der das Trägerteil 10 und den Teller 6 umfänglich umgibt. Bei einer solchen Ausgestaltung sind das Halteteil 2 und das Trägerteil 10 üblicherweise aus Kunststoffen ausgebildet, die an dem in den Zwischenraum 18 eingespritzten Kunststoff 24 haften, so dass sich in Richtung der Schwenkachse S eine stoffschlüssige Verbindung ergibt.

Die in Fig. 4 dargestellte Ausgestaltung entspricht im Wesentlichen Fig. 2, wobei indes von dem Teller 5 einteilig an dem Halteteil 2 ausgebildete Abstandshalter 20 abragen und gegen die Unterseite des Trägerteils 10 anliegen, um den Zwischenraum 18 zu definieren.

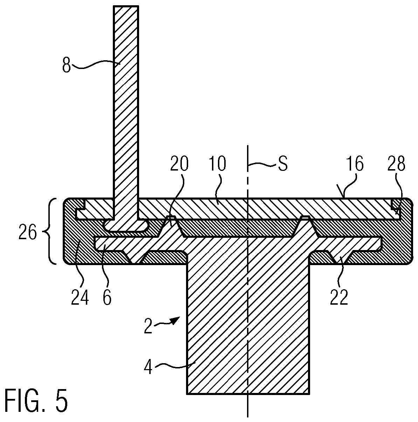

Die in Fig. 5 gezeigte Ausgestaltung entspricht im Wesentlichen dem Beispiel nach Fig. 1. Allerdings hat hier das Trägerteil 10 einen mit Abstand zu der Oberfläche 16 ausgebildeten Verriegelungsrand 28, der die von dem Trägerteil 10 ausgebildete Oberfläche 16 radial überragt und in Richtung einer mit Bezugszeichen S gekennzeichneten Schwenkachse von dem Kunststoff 24 übergriffen ist. Dadurch wird auch das Trägerteil 10 formschlüssig gegen Auszug in Richtung der Schwenkachse S gesichert. Durch das Untergreifen der Unterseite des Tellers 6 ergibt sich eine entsprechend wirkende formschlüssige Verbindung zwischen dem Kunststoff 24 und dem Halteteil 2. Im Übrigen umgibt der Kunststoff 24 sowohl das Trägerteil 10 als auch den Teller 6 außenumfänglich, so dass auch in einer Richtung radial zu der Schwenkachse S eine formschlüssige Verbindung gegeben ist. Das in Fig. 5 gezeigte Ausführungsbeispiel eignet sich insbesondere für die Verbindung der unterschiedlichen Bauteile, wenn das Material des Trägerteils und das Material des Halteteiles 2 haftungsinkompatibel zu dem Kunststoff 24 sind.

Die Fig. 6 verdeutlicht eine Querschnittsansicht durch ein Ausführungsbeispiel eines Trägerteils 10, welches im Bereich einer ersten Durchgangsbohrung 12.1 zu dem Borstenbündel 8 an der Rückseite mit einem vorstehenden Kragen 30 versehen ist, gegen welchen die Verdickung 14 stoffschlüssig anliegt. Hierzu ist das Filamentmaterial des Borstenbündels 8, d. h. das die Filamente eines einzelnen Borstenbündels 8 bildende Material an dem befestigungsseitigen Ende des Borstenbündels 8 angeschmolzen und schmelzflüssig gegen den Kragen 30 angelegt, wie dies in der auf die vorliegende Anmelderin zurückgehenden WO 2016/097091 A1 beschrieben ist.

Neben diesem Borstenbündel 8 sind verschiedene Ausführungsbeispiele von weichelastischen Reinigungselementen 32, 34, 36 verdeutlicht. Die weichelastischen Reinigungselemente bestehen bevorzugt aus einem thermoplastischen Elastomer, d. h., einem Material, welches sich mittels Spritzgießen verarbeiten lässt. Dabei hat das weichelastische Material bevorzugt eine Härte Shore A von zwischen 20 und 60. Das weichelastische Reinigungselement 32 überragt die Oberfläche 16 mit zylindrischer Ausgestaltung und ist vorderseitig abgerundet. An seinem gegenüberliegenden Ende hat das weichelastische Reinigungselement 32 eine Verdickung 38, die radial die Durchgangsbohrung 12.2 umfänglich überragt und gegen die Rückseite des Trägerteils 10 dichtend angelegt ist. Die Verdickung 38 ist aus dem das weichelastische Reinigungselement 32 bildenden Material geformt. Das weichelastische Reinigungselement 32 ist ein Beispiel für ein vorgefertigtes weichelastisches Reinigungselement, welches mit der Verdickung 38 zunächst beispielsweise in einer Spritzgießform vorbereitet und danach durch Einbringen in die Durchgangsbohrung 12.2 vormontiert bestopft ist.

Die weichelastischen Reinigungselemente 34, 36 sind mit unterschiedlicher Länge relativ zueinander vorgesehen und haben eine gemeinsame Verdickung 40, die die beiden stabförmigen Bereiche der Reinigungselemente 34, 36 miteinander verbinden und so die Reinigungselemente 34, 36 formschlüssig an der Rückseite des Trägerteils 10 positioniert.

Es bestehen verschiedene Möglichkeiten, die gezeigten Ausführungsbeispiele eines Bürstenkopfes herzustellen. Üblicherweise wird zunächst das Trägerteil 10 als Kunststoffplättchen mittels Spritzgießen hergestellt. Das Trägerteil 10 wird dann mit Borstenbündeln 8 bestopft, die befestigungsseitig angeschmolzen und dichtend gegen den in den jeweils zugeordneten Kragen 30 angelegt werden. Jedes Borstenbündel 8 weist eine ihm zugeordnete Durchgangsbohrung 12.1 auf. In dieser Weise vorbereitet kann das Trägerteil 10 mit den weichelastischen Reinigungselementen bestopft werden, die als vorgefertigte weichelastische Reinigungselemente 32 bzw. 34, 36 ausgebildet sind.

Alternativ können stabförmige Halbzeuge aus dem weichelastischen Material in die jeweiligen Durchgangsbohrungen 12.2 eingebracht und an ihren befestigungsseitigen Enden zur Ausbildung einer Verdickung 38 bzw. 40 erwärmt bzw. angeschmolzen werden.

Weiter alternativ kann das Trägerteil 10 in eine Spritzgießform eingesetzt werden, welches Kavitäten zur Ausbildung der weichelastischen Reinigungselemente 32, 34, 36 mit den zugehörigen Verdickungen 38, 40 ausformt. Diese Kavitäten können über gemeinsame Strömungskanäle innerhalb des Spritzgießwerkzeuges miteinander verbunden sein. Es können auch unterschiedliche Kavitäten zu weichelastischen Reinigungselementen 32, 34, 36 strömungstechnisch voneinander in der Spritzgießform getrennt sein, um weichelastische Reinigungselemente unterschiedlicher stofflicher Beschaffenheit und/oder Farbe herzustellen. Durch in die Kavitäten eingespritztes weichelastisches Kunststoffmaterial, insbesondere TPE, werden die weichelastischen Reinigungselemente 32, 34, 36 ausgebildet. Diese sind aufgrund der Verdickung 38, 40 formschlüssig gegenüber dem Trägerteil 10 festgelegt. Ebenso ergibt sich das schmelzflüssige Anlegen des weichelastischen Materials eine stoffschlüssige Verbindung. So ist jeder Kanal 12.1, 12.2 rückseitig versiegelt.

Gegen das Trägerteil 10 kann in einer weiteren Spritzgießform Kunststoffmaterial gespritzt werden, welches das Halteteil 2 ausbildet. Alternativ kann das Halteteil 2 auch als separates Bauteil vorbereitet und ein das Halteteil 2 und das Trägerteil 10 miteinander verbindender Kunststoff in den als Spalt ausgebildeten Zwischenraum 18 eingebracht werden, um die beiden Teile 2, 10 miteinander zu fügen.

Eine elektrisch betriebene Zahnbürste 50 besteht aus einem Griffteil 52 und einem auf das Griffteil 52 aufsteckbaren Aufsteckteil 54. Das Griffteil 52 nimmt einen Akkumulator 56 oder auch eine Batterie, einen Elektromotor 58 und eine Umsteuerungseinrichtung 60 auf, die die kontinuierliche Rotationsbewegung der Antriebswelle des Elektromotors 58 in eine alternierende Drehbewegung des mit Bezugszeichen 61gekennzeichneten Bürstenkopfes umsetzt.

An dem Griffteil 52 außen ist ein Schalter 62 zur Aktivierung der Zahnbürste 50 angeordnet. Das Aufsteckteil 54 besteht aus einem eine Welle 64 in sich aufnehmenden hohlen Trägerrohr 66. Das Trägerrohr 66 und die Welle 64 sind über nicht näher dargestellte Kupplungsmittel 70 mit dem Griffteil 52 verbindbar. An dem dem Griffteil 52 abgewandten Ende des Aufsteckteils 54 ist der Bürstenkopf 61 angeordnet, der mit seinem Zapfen 4 in das hohle Trägerrohr 66 hineinragt.

Dieser Zapfen 4 bildet einen Antriebszapfen 74 in der nachstehend näher beschriebenen Weise aus und ist auf eine Nabe 82 eines Kegelradsegmentes 76 aufsteckbar. Das Kegelradsegment 76 kämmt mit einem am Kopfende der Welle 64 angeordneten weiteren Kegelradsegmentes 78. Die Drehachse bzw. Symmetrieachse 92 des Bürstenkopfes 61 schließt mit der Drehachse der Welle 64 einen Winkel von ca. 90° ein.

Über das aus den Kegelradsegmenten 76 und 78 bestehende Kegelradgetriebe 72 wird das Drehmoment der alternierend angetriebenen Welle 64 auf den Bürstenkopf 61 übertragen. Der vom dem Bürstenkopf 61 überstrichene Drehwinkelbereich kann Werte zwischen +/- 20° und +/- 100° annehmen, liegt jedoch bevorzugt bei einem Wert von +/- 35°.

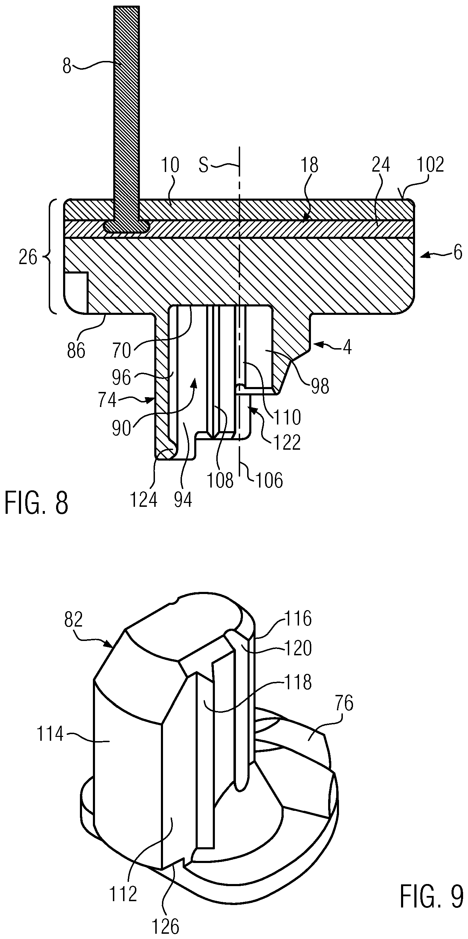

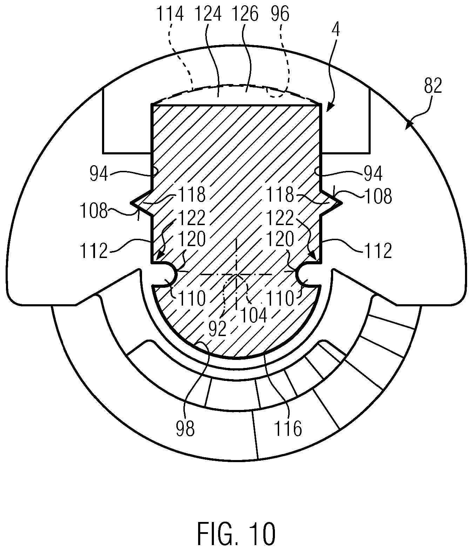

Die Darstellungen der Fig. 9 bis 10 zeigen den Antriebszapfen 74 sowie die Nabe 82 bzw. deren Anpassung aneinander im einzelnen. Die Nabe 82 ist an der Unterseite 86 des Antriebszapfens 74 angeordnet. Der Antriebszapfen 74 ist verdrehfest in der Nabe 82 angeordnet und gehalten. Die Nabe 82 ist dazu mit einer hülsenförmigen Ausnehmung 90 ausgestattet, die exzentrisch zu der Drehachse bzw. Symmetrieachse 92 des Bürstenkopfes 61 angeordnet ist. Die Ausnehmung 90 wird von zwei parallel angeordneten Seitenwänden 94, an die sich zylinderartige Seitenwandabschnitte 96, 98 anschließen, gebildet. Ein Boden 100 begrenzt die Ausnehmung 90 in Richtung einer Oberseite 102 des Bürstenkopfes 61. Dabei fällt der Mittelpunkt 104 des Seitenwandabschnittes 98 mit der Symmetrieachse 106 des Bürstenkopfes 61 zusammen. Die Seitenwände 94 weisen jeweils eine parallel zu der Symmetrieachse 106 verlaufende Nut 108 sowie eine benachbart angeordnete Feder 110 auf. Die Feder 110 bzw. Nut 108 einer jeden Seitenwand 94 sind einander gegenüberliegend angeordnet.

Der Antriebszapfen 74 ist entsprechend dem Negativbild der Nabe 82 ausgebildet und besitzt parallel verlaufende Seitenwände 112, an die sich zylinderartige Seitenwandabschnitte 114, 116 anschließen. Die Seitenwände 112 weisen entsprechende, parallel zur Symmetrieachse 92 verlaufende Federn 118 und Nuten 120 auf. Dabei können die Nuten 108, 120 bzw. die Federn 110, 118 der Ausnehmung 90 bzw. des Antriebszapfens 74 auch in einem Randbereich 122, in dem die Seitenwand 94 bzw. 112 in die Seitenwandabschnitte 96, 98 bzw. 114, 116 übergeht, angeordnet sein. Die Nabe 82 weist an dem, dem Bürstenkopf 61 abgewandten Randabschnitt einen Schnapphaken 124 auf, der eine an dem Antriebszapfen 74 angeformte Nase 126 übergreift.

Die Nabe 82 und der Antriebszapfen 74 können auch durch einen spritzgegossenen Zapfen 4 als einteiliges Bauteil hergestellt sein. Der Zapfen 4 bildet dann bevorzugt auch die Verzahnung des Kegelradsegmentes 76 aus.

### Bezugszeichenliste

- 2: Halteteil
- 4: Zapfen
- 6: Teller
- 8: Borstenbündel
- 10: Trägerteil
- 12: Durchgangsbohrung
- 14: Verdickung
- 16: Oberfläche
- 18: Zwischenraum
- 20: Abstandshalter
- 22: Noppe
- 24: in den Zwischenraum 18 eingespritzter Kunststoff
- 26: verbreiterter Teil
- 28: Verriegelungsrand, verbreiterter Teil des Bürstenkopfes
- S: Schwenkachse
- 30: Kragen
- 32: weichelastisches Reinigungselement
- 34: weichelastisches Reinigungselement
- 36: weichelastisches Reinigungselement
- 38: Verdickung
- 40: Verdickung
- 50: Zahnbürste
- 52: Griffteil
- 54: Aufsteckteil
- 56: Akkumulator
- 58: Elektromotor
- 60: Umsteuerungseinrichtung
- 61: Bürstenkopf
- 62: Schalter
- 66: hohles Trägerrohr
- 64: Welle
- 70: Kupplungsmittel
- 72: Kegelradgetriebe
- 74: Antriebszapfen

- 76: Kegelradsegment
- 78: Kegelradsegment
- 82: Nabe
- 86: Unterseite
- 90: hülsenförmige Ausnehmung
- 92: Drehachse bzw. Symmetrieachse
- 94: Seitenwand
- 96: zylinderartiger Seitenwandabschnitt
- 98: zylinderartiger Seitenwandabschnitt
- 100: Boden
- 102: Oberseite
- 104: Mittelpunkt des Seitenwandabschnittes 98
- 106: Symmetrieachse des Bürstenkopfes 61
- 108: Nut
- 110: Feder
- 112: Seitenwand
- 114: zylinderartige Seitenwandabschnitte
- 116: zylinderartige Seitenwandabschnitte
- 118: Federn
- 120: Nuten
- 122: Randbereich
- 124: Schnapphaken
- 126: Nase

## Patentansprüche

1. Bürstenkopf für eine elektrisch angetriebene Zahnbürste mit einem Halteteil (2), das mit einem Trägerteil (10) verbunden ist, von dessen Oberfläche (16) zumindest ein durch Borstenfilamente gebildetes Borstenbündel (8) und ein weichelastisches Reinigungselement (32, 34, 36) abragt,
**dadurch gekennzeichnet,**
**dass** das Trägerteil (10) Durchgangsbohrungen (12) aufweist, dass das Borstenbündel (8) und das weichelastische Reinigungselement (32, 34, 36) jeweils eine der Durchgangsbohrungen (12) durchragen und formschlüssig durch eine durch das Filamentmaterial gebildete Verdickung (14) bzw. das weichelastische Material gebildete Verdickung (38, 40) gegenüber dem Trägerteil (10) festgelegt sind.

2. Bürstenkopf nach Anspruch 1, **dadurch gekennzeichnet, dass** die Verdickung (14, 38, 40) stoffschlüssig mit dem Trägerteil (10) verbunden ist.

3. Bürstenkopf nach einem der vorherigen Ansprüche, **dadurch gekennzeichnet, dass** die Verdickung (14, 38, 40) derart mit dem Trägerteil (10) verbunden ist, dass eine rückseitige Öffnung zu der Durchgangsbohrung (12) verschlossen ist.

4. Bürstenkopf nach einem der vorherigen Ansprüche, **dadurch gekennzeichnet, dass** die rückseitige Öffnung zu der Durchgangsbohrung (12) durch schmelzflüssig gegen das Trägerteil (10) angelegtes Filamentmaterial bzw. weichelastisches Material verschlossen ist.

5. Bürstenkopf nach einem der vorherigen Ansprüche, **dadurch gekennzeichnet, dass** mehrere weichelastische Reinigungselemente (34, 36) eine gemeinsame Verdickung (40) aufweisen und über diese miteinander verbunden sind.

6. Bürstenkopf nach einem der vorherigen Ansprüche, **dadurch gekennzeichnet, dass** das Halteteil (2) und das Trägerteil (10) über eine schmelzflüssig in einen Spalt (18) zwischen dem Trägerteil (10) und dem Halteteil (2) eingebrachte Kunststoffmasse (24) miteinander verbunden sind.

7. Bürstenkopf nach Anspruch 6 **dadurch gekennzeichnet, dass** der in den Spalt (18) eingebrachte Kunststoff (24) das Trägerteil (10) und/oder einen durch das Halteteil (2) ausgebildeten Teller (6) umfänglich umgibt insbesondere den Teller (6) und/oder den Borstenträger unter- bzw. übergreift.

8. Bürstenkopf nach Anspruch 6 oder 7, **dadurch gekennzeichnet, dass** das Trägerteil (10) und/oder das Halteteil (2) zumindest einen den Spalt vorgebenden Abstandshalter (20) ausbildet.

9. Bürstenkopf nach einem der vorherigen Ansprüche **gekennzeichnet durch** ein Anschlusselement für die mechanische Kopplung des Bürstenkopfes an einen elektrischen Antrieb der elektrisch angetriebenen Zahnbürste.

10. Aufsteckteil für eine elektrische Zahnbürste mit einem Hülsenelement, einer darin vorgesehenen Antriebswelle, die mit einem Antrieb der elektrischen Zahnbürste kuppelbar ist, und einem Bürstenkopf nach einem der Ansprüche 1 bis 8, der mit der Antriebswelle gekoppelt ist.

11. Verfahren zum Herstellen eines Bürstenkopfes für eine elektrisch angetriebene Zahnbürste mit einem Halteteil (2), das mit einem Trägerteil (10) verbunden ist, von dessen Oberfläche zumindest ein durch Borstenfilamente gebildetes Borstenbündel (8) und ein weichelastisches Reinigungselement (32, 34, 36) abragt, bei dem zunächst das Trägerteil (10) als separates Bauteil mit Durchgangsbohrungen (12) vorbereitet wird und zumindest ein eine der Durchgangsbohrungen (12.1) durchragendes Borstenbündel (8) aus Borstenfilamenten und zumindest ein diese oder eine andere der Durchgangsbohrungen (12.2) durchragendes weichelastisches Reinigungselement (32, 34, 36) mit dem Trägerteil (10) verbunden und über eine an dem Borstenbündel (8) bzw. dem weichelastischen Reinigungselement (32, 34, 36) ausgebildete Verdickung (14, 38, 40) festgelegt wird und danach das so vorbereitete Trägerteil (10) mit dem Halteteil (2) verbunden wird.

12. Verfahren nach Anspruch 11,
**dadurch gekennzeichnet, dass** die aus dem Filamentmaterial gebildete Verdickung (14) und/oder die aus dem weichelastischen Material gebildete Verdickung (38, 40) schmelzflüssig gegen eine rückseitige Öffnung zu der Durchgangsbohrung (12.1, 12.2) diese abdichtend angelegt wird.

13. Verfahren nach Anspruch 11 oder 12,
**dadurch gekennzeichnet, dass** das Trägerteil (10) mit einem vorgefertigten weichelastischen Element (32) bestopft wird.

14. Verfahren nach einem der Ansprüche 11 bis 13,
**dadurch gekennzeichnet, dass** das weichelastische Material zur Ausbildung des weichelastischen Elementes (32, 34, 36) schmelzflüssig durch die Durchgangsbohrung (12.2) hindurch gespritzt wird.

15. Verfahren nach einem der Ansprüche 11 bis 14,
**gekennzeichnet durch** einen Warmumformschritt, bei dem Borstenbündel (8) und/oder ein Vorformling eines weichelastischen Reinigungselementes (32, 34, 36) nach Einbringen in die zugehörige Durchgangsbohrung (12.1, 12.2) an seinem befestigungsseitigen Ende zur Ausbildung der Verdickung (14; 38, 40) erwärmt wird.

16. Verfahren nach einem der Ansprüche 11 bis 15,
**dadurch gekennzeichnet, dass** zumindest ein weichelastisches Reinigungselement (32, 34, 36) und ein Borstenbündel (8) gemeinsam in einer einzigen Durchgangsbohrung (12.1, 12.2) vorgesehen werden.

17. Verfahren nach Anspruch 16,
**dadurch gekennzeichnet, dass** das zumindest eine weichelastische Reinigungselement (32, 34, 36) und das Borstenbündel (8) gemeinsam befestigungsseitig zur Ausbildung einer gemeinschaftlichen Verdickung erwärmt werden.

## Claims

1. A brush head for an electrically driven toothbrush having a holding part (2) connected to a carrier part (10) from the surface (16) of which at least a bristle bundle (8) formed by bristle filaments and a resiliently soft cleaning element (32, 34, 36) project,
**characterized in that**
said carrier part (10) comprises passage bores (12), that said bristle bundle (8) and said resiliently soft cleaning element (32, 34, 36), respectively, project through one of said passage bores (12) and are fixed in a positive-fit manner relative to said carrier part (10) by way of a thickened portion (14) formed by said filament material or a thickened portion (38, 40) formed by said resiliently soft material.

2. The brush head according to claim 1, **characterized in that** said thickened portion (14, 38, 40) is connected in a positive substance-fit manner to said carrier part (10).

3. The brush head according to any one of the preceding claims, **characterized in that** said thickened portion (14, 38, 40) is connected to said carrier part (10) such that an opening on the rear side to said passage bore (12) is closed.

4. The brush head according to any one of the preceding claims, **characterized in that** said opening on the rear side to said passage bore (12) is closed by filament material or resiliently soft material applied in a molten state against said carrier part (10).

5. The brush head according to any one of the preceding claims, **characterized in that** several resiliently soft cleaning elements (34, 36) have a common thickened portion (40) and are thereby connected to each other.

6. The brush head according to any one of the preceding claims, **characterized in that** said holding part (2) and said carrier part (10) are connected to each other by a body of plastic material (24) introduced in a molten state into a gap (18) between said carrier part (10) and said holding part (2).

7. The brush head according to claim 6, **characterized in that** said plastic material (24) introduced into said gap (18) circumferentially surrounds said carrier part (10) and/or a plate (6) formed by said holding part (2), in particular underlaps or overlaps said plate (6) and/or said bristle carrier.

8. The brush head according to one of claims 6 and 7, **characterized in that** said carrier part (10) and/or said holding part (2) forms at least one spacer (20) defining said gap.

9. The brush head according to any one of the preceding claims **characterized by** a connecting element for mechanically coupling said brush head to an electric drive of said electrically driven toothbrush.

10. An attachment part for an electric toothbrush comprising a sleeve member, a drive shaft provided therein which can be coupled to a drive of said electric toothbrush, and a brush head according to anyone of claims 1 to 8 coupled to said drive shaft.

11. A method for manufacturing a brush head for an electrically driven toothbrush having a holding part (2) which is connected to a carrier part (10), from the surface of which at least a bristle bundle (8) formed by bristle filaments and a resiliently soft cleaning element (32, 34, 36) project, wherein said carrier part (10) is first prepared as a separate component with passage bores (12), and at least one bristle bundle (8) made of bristle filaments projecting through one of said passage bores (12.1) and at least one resiliently soft cleaning element (32, 34, 36) projecting through said passage bore or one of the other passage bores (12.2) is connected to said carrier part (10) and is fixed by way of a thickened portion (14, 38, 40) formed on said bristle bundle (8) or on said resiliently soft cleaning element (32, 34, 36), respectively, and thereafter said carrier part (10) thus prepared is connected to said holding part (2).

12. The method according to claim 11, **characterized in that** said thickened portion (14) formed from said filament material and/or said thickened portion (38, 40) formed from said resiliently soft material is sealingly applied in a molten state against an opening on the rear side to said passage bore (12.1, 12.2).

13. The method according to one of claims 11 and 12, **characterized in that** said carrier part (10) is stuffed with a prefabricated resiliently soft element (32).

14. The method according to any one of claims 11 to 13, **characterized in that** said resiliently soft material for forming said resiliently soft element (32, 34, 36) is injected in a molten state through said passage bore (12.2).

15. The method according to any one of claims 11 to 14, **characterized by** a hot-forming step, in which bristle bundles (8) and/or a preform of a resiliently soft cleaning element (32, 34, 36) after insertion into the associated passage bore (12.1, 12.2) is heated at its end on the attachment side for forming said thickened portion (14, 38, 40).

16. The method according to any one of claims 11 to 15, **characterized in that** at least one resiliently soft cleaning element (32, 34, 36) and a bristle bundle (8) are provided in combination in a single passage bore (12.1, 12.2).

17. The method according to claim 16, **characterized in that** said at least one resiliently soft cleaning element (32, 34, 36) and said bristle bundle (8) are both heated at the attachment side for forming a combined thickened portion.

## Revendications

1. Tête de brosse pour une brosse à dents à entraînement électrique, comprenant une pièce de retenue (2) qui est reliée à une pièce de support (10) à partir de la surface (16) de laquelle dépasse au moins un paquet de soies (8) formé de filaments formant soie et un élément de nettoyage élastique souple (32, 34, 36),
**caractérisée en ce que**
la pièce de support (10) présente des trous traversants (12) et **en ce que** le paquet de soies (8) et l'élément de nettoyage élastique souple (32, 34, 36) traversent respectivement un des trous traversants (12) et sont fixés par rapport à la pièce de support (10) avec verrouillage par complémentarité de forme grâce à un épaississement (14) formé par le matériau filamentaire ou à un épaississement (38, 40) formé par le matériau élastique souple.

2. Tête de brosse selon la revendication 1, **caractérisée en ce que** l'épaississement (14, 38, 40) est relié à la pièce de support (10) avec verrouillage par complémentarité de matière.

3. Tête de brosse selon l'une quelconque des revendications précédentes, **caractérisée en ce que** l'épaississement (14, 38, 40) est relié à la pièce de support (10) de telle manière qu'un orifice arrière menant au trou traversant (12) est obturé.

4. Tête de brosse selon l'une quelconque des revendications précédentes, **caractérisée en ce que** l'orifice arrière menant au trou traversant (12) est obturé par un matériau filamentaire ou un matériau élastique souple appliqué en fusion contre la pièce de support (10).

5. Tête de brosse selon l'une quelconque des revendications précédentes, **caractérisée en ce que** plusieurs éléments de nettoyage élastiques souples (34, 36) présentent un épaississement (40) commun et sont reliés entre eux par ledit épaississement.

6. Tête de brosse selon l'une quelconque des revendications précédentes, **caractérisée en ce que** la pièce de retenue (2) et la pièce de support (10) sont reliées entre elles par l'intermédiaire d'une masse de plastique (24) introduite en fusion dans un interstice (18) situé entre la pièce de support (10) et la pièce de retenue (2).

7. Tête de brosse selon la revendication 6, **caractérisée en ce que** la matière plastique (24) introduite dans l'interstice (18) entoure de manière circonférentielle la pièce de support (10) et/ou une plaque (6) formée par la pièce de retenue (2), en particulier enserre la plaque (6) et/ou le porte-soies.

8. Tête de brosse selon la revendication 6 ou 7, **caractérisée en ce que** la pièce de support (10) et/ou la pièce de retenue (2) forme(nt) au moins une entretoise (20) définissant l'interstice.

9. Tête de brosse selon l'une quelconque des revendications précédentes, **caractérisée par** un élément de raccordement destiné au couplage mécanique de la tête de brosse à un entraînement électrique de la brosse à dents à entraînement électrique.

10. Pièce enfichable pour une brosse à dents électrique, comprenant un élément formant manchon, un arbre d'entraînement qui est fourni dans ledit élément formant manchon et peut être accouplé à un entraînement de la brosse à dents électrique, et une tête de brosse selon l'une quelconque des revendications 1 à 8 qui est accouplée à l'arbre d'entraînement.

11. Procédé de fabrication d'une tête de brosse pour une brosse à dents à entraînement électrique, comprenant une pièce de retenue (2) reliée à une pièce de support (10), à partir de la surface de laquelle dépasse au moins un paquet de soies (8) formé de filaments formant soie et un élément de nettoyage élastique souple (32, 34, 36), au cours duquel la pièce de support (10) est d'abord préparée sous la forme d'un composant séparé présentant des trous traversants (12), et au moins un paquet de soies (8) en filaments formant soie traversant un des trous traversants (12.1) et au moins un élément de nettoyage élastique souple (32, 34, 36) traversant ledit ou un autre des trous traversants (12.2) sont reliés à la pièce de support (10) et sont fixés grâce à un épaississement (14, 38, 40) formé au niveau du paquet de soies (8) ou de l'élément de nettoyage élastique souple (32, 34, 36), et la pièce de support (10) ainsi préparée est ensuite reliée à la pièce de retenue (2).

12. Procédé selon la revendication 11,
**caractérisé en ce que** l'épaississement (14) formé à partir du matériau filamentaire et/ou l'épaississement (38, 40) formé à partir du matériau élastique souple est/sont appliqué(s) en fusion contre un orifice arrière menant au trou traversant (12.1, 12.2) de manière à rendre étanche ledit orifice.

13. Procédé selon la revendication 11 ou 12,
**caractérisé en ce que** la pièce de support (10) est garnie d'un élément élastique souple (32) préfabriqué.

14. Procédé selon l'une quelconque des revendications 11 à 13,
**caractérisé en ce que** le matériau élastique souple est injecté en fusion à travers le trou traversant (12.2) afin de former l'élément élastique souple (32, 34, 36).

15. Procédé selon l'une quelconque des revendications 11 à 14,
**caractérisé par** une étape de formage à chaud au cours de laquelle le paquet de soies (8) et/ou une préforme d'un élément de nettoyage élastique souple (32, 34, 36) est/sont chauffé(s) après insertion, au niveau de son extrémité située côté fixation, dans le trou traversant (12.1, 12.2) correspondant afin de former l'épaississement (14 ; 38, 40).

16. Procédé selon l'une quelconque des revendications 11 à 15,
**caractérisé en ce qu'**au moins un élément de nettoyage élastique souple (32, 34, 36) et un paquet de soies (8) sont fournis ensemble dans un trou traversant (12.1, 12.2) unique.

17. Procédé selon la revendication 16,
**caractérisé en ce que** le au moins un élément de nettoyage élastique souple (32, 34, 36) et le paquet de soies (8) sont chauffés ensemble du côté de la fixation afin de former un épaississement commun.
